# EUROPEAN PATENT SPECIFICATION

(11) **EP 0 654 387 B1**
(45) Date of publication and mention of the grant of the patent: **07.07.1999**
(21) Application number: 94308701.5
(22) Date of filing: 24.11.1994
(51) Int. Cl.: B60T 17/08

(54) **Fluid pressure operable spring force actuators**
Druckmittelbetriebene Federspeicherbremsen
Dispositifs d'actionnement de force à ressort commandés par pression fluidique

(30) Priority: 24.11.1993 GB 9324179
(43) Date of publication of application: 24.05.1995
(73) Proprietor: Knorr-Bremse Systems for Commercial Vehicles Limited, Kingswood, Bristol BS15 2NL (GB)
(72) Inventor: Fisher, Paul Anthony, Hanham, Bristol, BS15 3JW (GB); Mallett, Christopher John, Bedminster, Bristol, BS3 4PB (GB)
(74) Representative: Turner, Alan Reginald

(56) References cited:
- EP-A- 0 016 566
- DE-A- 3 101 608
- US-A- 4 080 875

## Description

### Technical Field

This invention relates to fluid pressure operable spring force actuators and relates especially to spring force actuators for use in fluid pressure operable braking systems.

In fluid pressure operable braking systems it is known to provide spring force actuators for applying brake forces to wheel brakes. Such wheel brakes may typically be cam operated drum brakes or disc brakes and the actuators may provide secondary and/or parking brake actuation compressive forces which are distinct from service brake compressive forces applied from further service brake actuators. In contrast, it has been proposed to provide spring brake actuators which apply tension forces to their linkages. One basic form of such spring brake actuator for a disc brake employing a diaphragm is described in European patent specification No. 0099689.

In its bare essentials such a tension actuator comprises a pressure responsive member which is movable in a housing by fluid pressure acting upon a fluid pressure responsive member and the fluid pressure responsive member acts in a sense to oppose and overcome the force of a power spring. In normal service of the vehicle, the power spring is held compressed by the fluid pressure but for secondary and/or parking brake application, the fluid pressure is reduced or removed and the spring then applies tension to the output member anchor linkage. This ensures that parking in particular is safely achieved regardless of subsequent loss of fluid pressure from the brake system. However, in the event that it is required to move the vehicle quickly, for example in the event of a threat from a nearby fire, it is desirable to be able to release the parking brakes more quickly than may otherwise be achievable only after recharging the pressures in the brake system by running the engine.

In the case of spring force actuators which operate to provide compressive forces it has already been proposed in U.S. Patent Specification No. 4,080,875 and in European Patent Specification No. 0016566 to incorporate a locking mechanism in a pressure responsive piston assembly of the actuator to lock the piston to an output member. The locking mechanism is releasable by mechanical means passing through non-pressurised end plate of the actuator and such release therefore removes the compressive force of the power spring from the actuator output member.

In the case of an actuator which applies tension to its output member especially where the actuator employs a diaphragm is is not possible to provide access to such a mechanism passing through the pressurised end plate without providing undesirable extra seal arrangements.

### Disclosure of the Invention

The object of the invention is to provide an improved fluid pressure operable spring force actuator which permits release of the spring force output from an output member under tension other than by the application of normal hold-off pressure.

According to the present invention there is provided a fluid pressure operable spring force tension actuator including a housing and a fluid pressure operable diaphragm assembly movable in said housing and a force output member having a first part extending outwardly of the housing operable to transmit output force from a compressed power spring dependent upon fluid pressure at a fluid pressure input port characterised in that said force output member has a second part movable in telescopic manner relative to the first part with releasable locking means normally constraining said parts to move together and that release means of said locking means is actuable by externally accessible means passing through a lateral opening provided in said first part of the output member.

### Description of the Drawings

In order that the invention may be more clearly understood and readily carried into effect, the same will be further described by way of example with reference to the accompanying drawings of which:
Figure 1 illustrates a fluid pressure operable spring force actuator in accordance with one example of the invention;
Figure 2 illustrates a fragmental view of a modification of the actuator of Figure 1; and
Figure 3 illustrates a fragmental side view of the actuator of Figure 2.

### Mode of carrying out the Invention

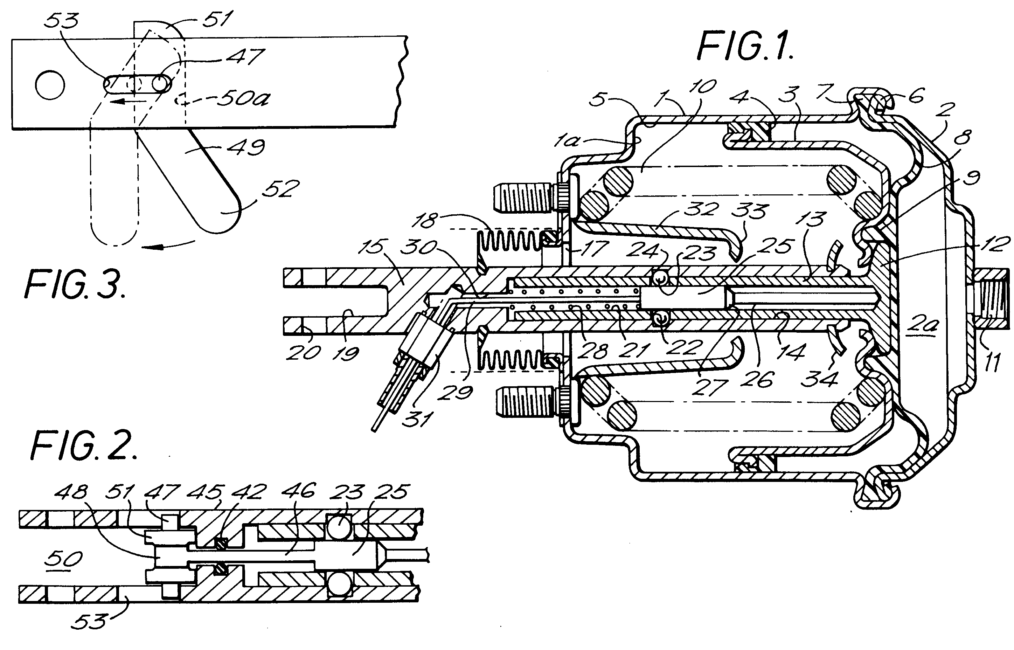

Referring to Figure 1, the actuator shown is suitable for use as a parking brake actuator of a commercial vehicle fitted with disc brakes. The actuator has a housing comprising a pressed steel generally cylindrical part 1, having an internal bore 5 within which a deeply dished push plate 3 with a peripheral wear ring 4 is axially guided. The housing also has an end cover 2 having a peripheral lip 6 between which and the open end of bore 5, there is trapped the peripheral bead 7 of a flexible diaphragm 8 responsive to compressed air pressure at an input part 11. The central part 9 of the diaphragm is bonded to the right hand side of the push plate 3 and a power spring 10 is located under compression between the other side thereof and the closed end of the cylindrical part 1 of the housing. The push plate 3 and the diaphragm 9 are mutually shaped to trap a head part 12 of a generally axially located part 13 of an output member which is therefore moveable as one with the diaphragm 9 and plate 12. The part 13 of this fluid pressure responsive assembly extends coaxially in telescopic manner within an axial bore 14 of a rod-like part 15 of the output member which passes movably through an aperture 17 and has a flexible gaiter 18. The outer end of the part 15 is provided with a slot 19 and a transverse drilling 20 to receive a clevis pin connecting it to a disc brake mechanism (not shown). A generally frusto conical part 32 which is carried by the part 1 provides a stop surface 33 co-operable with a stop member 34 carried in part 13.

The part 13 of the fluid pressure responsive assembly has an axial drilling 21, an axially internally movable cam member 25 and a plurality of circumferentially spaced radial apertures 22 which movably locate respective steel balls 23, the diameters of which are greater than the radial lengths of these apertures. In the position shown, the balls 23 are resting against the cam member 25 so that they are retained in a locating manner in an internal groove 24 within the bore 14 of part 15 of the output member. The cam member 25 extends via a ramp portion 27 to a portion 26 of lesser diameter such that the wall thickness and the reduced diameter can accommodate the diameter of the balls 24. The cam member is urged into the position shown by a light spring 28 and provided with a flexible cable 29 connection passing axially through a bore 30 in 15 before turning outwards through a lateral opening and a fitting 31 to a remotely located release lever (not shown).

In operation it is to be appreciated that in the condition shown, the chamber 2a to the right of the diaphragm 9 is at least partially vented via input port 11 so that the force of spring 10 is applied via the pressure responsive assembly and the locking means provided by the balls 24 located in the position shown, as tension to the part 15. A reduction of output force is therefore achieved in normal operation by increasing the pressure from a brake valve (not shown) connected via port 11 to chamber 2a. In the fully released condition, the stop 34 will rest against the stop surface 33 and no output tension is applied by 15. In the event that a vehicle using this brake actuator has been parked with the chamber 2a vented giving full parking brake force and assuming that the storage reservoirs of the vehicle are at depleted pressure the brakes cannot be released by operating the respective pressure control valve. The brakes can however be released by manually operating a lever (not shown) to actuate cable 29 and move cam member 25 leftward within the part 13 against spring 29 as seen in the drawing. Such movement of member 25 permits balls 24 to be radially deflected, down the ramp 27, to axially mutually release the locking between the pressure responsive assembly and the output member 15. The tension on 15 is thereby rapidly removed and the brakes are released. Upon releasing of the cable 29 and subsequent repressurising of chamber 2a the cam 27 will urge the balls 24 back to their locations as shown whilst undesired outward axial movement of part 13 is prevented by engagement of part 34 with surface 33. The actuator will therefore revert to normal operation with parts 13 and 14 locked together.

The mentioned (not shown) lever for operating cable 29 is located remotely from the brake actuator so that the operator may for example be more safely positioned near or within the drivers' cab and not beneath the vehicle. However, if a remotely operable cable is not required, the mechanism may be simplified to include a release lever carried by the output member 15 and one possible form of such a lever may be as shown in Figures 2 and 3.

Referring to Fig. 2, a fragmental enlarged view of the yoke part 45 corresponds with the part 15 of the spring force actuator shown in Fig. 1. In this modification, the cable 29 of Fig. 1 is replaced by a rod 46 passing through a contaminants seal 42 and joining the cam member 25 to a transverse pin 47 via an eye 48. The pin 47 is located in transverse slots 53 on each side of the yoke part 45 which also accommodate the inner end of a release lever 49. One edge 51 of this inner end of the lever 49 is radiussed and rests against the inner extremity 50a of the slot 50 of the yoke. The lever also has a lower arm 52 projecting laterally from yoke 45, which when the arm 52 is deflected in the direction of the arrow to a position such as that shown by the broken outline in Figure 3, causes the end 51 to bear against the extremity 50a in such a way as to displace the cam member 25 leftwardly. Release and reset of the actuator is therefore achieved in a similar manner to that described above with reference to Fig. 1.

## Claims

1. A fluid pressure operable spring force tension actuator including a housing (1) and a fluid pressure operable diaphragm assembly (3,7,8) movable in said housing (1) and a force output member (13,15) having a first part (15) extending outwardly of the housing operable to transmit output force from a compressed power spring (10) dependent upon fluid pressure at a fluid pressure input port (11) characterised in that said force output member has a second part (13) movable in telescopic manner relative to the first part (15) with releasable locking means (23,25) normally constraining said parts (13,15) to move together and that release means (29;46) of said locking means is actuable by externally accessible means (30;49) passing through a lateral opening provided in said first part of the output member.

2. An actuator as claimed in claim 1 further characterised in that said locking means comprises one or more detent members (23) movable laterally with respect to the direction of said relative movement between said parts (13,15) and operable by cam means (25) connected to said release means (29;46).

3. An actuator as claimed in claim 2 further characterised in that said cam means (25) is located within an inner one of said parts (13,15) and is movable in the direction of said relative movement therebetween to operate said one or more detent members (23) by moving each outwards to lock said parts (13,15) together.

4. An actuator as claimed in claim 3 further characterized in that said detent members (23) comprise a plurality of such members arranged annularly around said cam means (25).

5. An actuator as claimed in any one of claims 2 to 4 further characterised in that said detent members (23) each comprise a ball.

6. An actuator as claimed in any one of claims 2 to 5 further characterised in that said cam means (25) comprises an elongate member guided within an inner one of said parts (13,15) and having a cam-shaped shoulder (27) that cooperates with each detent member (23).

7. An actuator as claimed in claim 6 further characterised in that said elongate member (25) comprises two portions of differing diameter (25,26) connected by said shoulder (27).

8. An actuator as claimed in any one of claims 2 to 7 further characterized in that spring means (28) is located within an inner one of said parts (13,15) with said cam means (25) so as to urge said cam means (25) to a position in which the cam means (25) cooperates with each detent member (23) to hold it in a locking position between said parts (13,15).

9. An actuator as claimed in any one of the preceding claims characterised in that said release means (29) comprises an elongate flexible member that extends through said lateral opening of said output member (15).

10. An actuator as claimed in any one of the preceding claims 1 to 8 characterised in that said release means (29) comprises an elongate member connected to an operating lever (49) which extends outwardly through said lateral opening of said output member.

## Patentansprüche

1. Ein fluiddruckbetätigbarer Federspreicherbremszylinder mit einem Gehäuse (1) und einer auf Fluiddruck ansprechenden Membrananordnung (3, 7, 8), die im Gehäuse (1) beweglich ist, und einem Kraft-Ausgabeelement (13, 15) mit einem ersten Teil (15), das sich nach außen erstreckt, das betätigbar ist, um eine Ausgabekraft von einer zusammengedrückten Speicherfeder (10) auszugeben, die von dem Fluiddruck an einem Fluiddruck-Einlaßanschluß (11) abhängig ist, dadurch gekennzeichnet, daß das Kraftausgabeelement ein zweites Teil (13) aufweist, das auf teleskopische Art relativ zu dem ersten Teil (15) mit lösbaren Verschlußelementen (23, 25) bewegbar ist, die normalerweise die Teile (13, 15) zusammenziehen, um sich zusammen zu bewegen, und daß ein Freigabeelement (29; 46) des Feststellelements durch von außen zugängliche Mittel (30; 49) betätigbar ist, die durch laterale Öffnungen hindurchgehen, die in dem ersten Teil des Ausgabeelements vorgesehen sind.

2. Ein Bremszylinder gemäß Anspruch 1, der weiterhin dadurch gekennzeichnet ist, daß das Verschlußmittel ein oder mehr Arretierungselemente (23) aufweist, die lateral gegenüber der Richtung der relativen Bewegung zwischen den Teilen (13, 15) bewegbar und durch ein Nockenmittel (25) betätigbar sind, das an dem Freigabeelement (29; 46) verbunden ist.

3. Ein Bremszylinder gemäß Anspruch 2, der weiter dadurch gekennzeichnet ist, daß sich das Nockenelement (25) innerhalb des inneren der Teile (13, 15) befindet und es in Richtung der relativen Bewegung dazwischen bewegbar ist, um das besagte eine oder mehr Arretierungselemente (23) zu betatigen, indem sie jeweils nach außen bewegt werden, um die Teile (13, 15) miteinander zu verriegeln.

4. Ein Bremszylinder gemäß Anspruch 1, der weiter dadurch gekennzeichnet ist, daß das Arretierungselement (23) eine Anzahl von solchen Elementen aufweist, die ringförmig um das Nockenelement (25) angeordnet sind.

5. Bremszylinder gemäß einem der Ansprüche 2 bis 4, weiterhin dadurch gekennzeichnet, daß die Arretierungselemente (23) jeweils eine Kugel aufweisen.

6. Bremszylinder gemäß einem der Ansprüche 2 bis 5, weiterhin dadurch gekennzeichnet, daß das Nockenmittel (25) ein längliches Element aufweist, das innerhalb des inneren der Teile (13, 15) geführt ist und das eine nockenförmige Schulter (27) aufweist, die mit jedem Arretierungselement (23) zusammenwirkt.

7. Bremszylinder gemäß Anspruch 6, weiterhin dadurch gekennzeichnet, daß das längliche Element (25) zwei Abschnitte unterschiedlichen Durchmessers (25, 26) aufweist, die durch die Schulter (27) verbunden sind.

8. Bremszylinder gemäß einem der Ansprüche 2 bis 7, weiterhin dadurch gekennzeichnet, daß sich das Federelement (28) innerhalb des inneren Teils (13, 15) mit dem Nockenelement (25) befindet, derart, daß das Nockenmittel (25) in eine Position gezwungen wird, in der das Nockenmittel (25) mit jedem Arretierungselement (23) zusammenwirkt, um es in einer Verschlußposition zwischen den Teilen (13, 15) zu halten.

9. Bremszylinder gemäß einem der vorhergehenden Ansprüche, dadurch gekennzeichnet, daß das Freigabeelement (29) ein längliches flexibles Element aufweist, das durch die laterale Öffnung des Ausgabeelements (15) hindurchragt.

10. Bremszylinder gemäß einem der vorhergehenden Ansprüche 1 bis 8, dadurch gekennzeichnet, daß das Freigabeelement (29) ein längliches Element aufweist, daß an einem Betätigungshebel (49) angeschlossen ist, der sich nach außen durch die laterale Öffnung des Ausgabeelements erstreckt.

## Revendications

1. Actionneur de tension élastique à pression fluidique, comprenant un carter et un ensemble à membrane (3,7,8) actionné par pression fluidique déplaçable dans ce carter (1) et une pièce de sortie pour transmettre de la force (13,15), formée d'une première partie (15) s'étendant à l'extérieur du carter, actionnée pour transmettre la force de sortie d'un ressort (10) de compression dépendant de la pression fluidique à un orifice d'entrée (11), caractérisé en ce que cette pièce de sortie de force présente une deuxième partie (13) déplaçable de façon télescopique par rapport à la première partie (15) comportant un moyen de blocage (23,25) libérable qui assujettit normalement ces parties (13,15) à se déplacer simultanément et en ce que le moyen de libération (29,46) de ce moyen de blocage est actionné par un moyen (30,49) accessible de l'extérieur passant à travers une ouverture latérale ménagée dans cette première partie de la pièce de sortie.

2. Actionneur selon la revendication 1, caractérisé en ce que ce moyen de blocage comprend un ou plusieurs éléments d'arrêt (23) déplaçables latéralement par rapport à la direction de ce mouvement relatif entre les parties (13,15) et actionné par un moyen à cames (30,49) relié au moyen de libération (29,46).

3. Actionneur selon la revendication 2, caractérisé en ce que le moyen à cames (25) est disposé dans l'une intérieure de ces parties (13,15) et déplaçable dans la direction de ce mouvement relatif entre elles pour actionner le ou les élément(s) d'arrêt (23) en les déplaçant chacun vers l'extérieur pour bloquer les parties (13,15) entre elles.

4. Actionneur selon la revendication 3, caractérisé en ce que les éléments d'arrêt (23) comprennent une pluralité de tels éléments en disposition annulaire autour du moyen à cames (25).

5. Actionneur selon l'une quelconque des revendications 2 à 4, caractérisé en ce que les éléments d'arrêt (23) comprennent chacun une bille.

6. Actionneur selon l'une quelconque des revendications 2 à 5, caractérisé en ce que le moyen à cames (25) comprend un élément allongé guidé à l'intérieur de l'une intérieure des parties (13,15) et présentant un épaulement (27) en forme de came coopérant avec chaque élément d'arrêt (23).

7. Actionneur selon la revendication 6, caractérisé en ce que l'élément allongé (25) comprend deux zones (25,26) de diamètre différent reliées par l'épaulement (27).

8. Actionneur selon l'une quelconque des revendications 2 à 7, caractérisé en ce qu'un moyen élastique (28) est disposé dans l'une intérieure des parties (13,15) avec le moyen à cames (25) de manière à pousser le moyen à cames (25) dans une position dans laquelle le moyen à cames (25) coopère avec chaque élément d'arrêt (23) pour le maintenir dans une position de blocage entre les deux parties (13,15).

9. Actionneur selon l'une quelconque des revendications précédentes, caractérisé en ce que le moyen de libération (29) comporte un élément allongé flexible s'étendant à travers l'ouverture latérale de l'élément de sortie (15).

10. Actionneur selon l'une quelconque des revendications 1 à 8, caractérisé en ce que le moyen de libération (29) comporte un élément allongé relié à un levier de commande (49) s'étendant vers l'extérieur à travers l'ouverture latérale de la pièce de sortie.
